Europäisches Patentamt

European Patent Office

Office européen des brevets

(19)

(11) Publication number: **0 236 633 B1**

(12) **EUROPEAN PATENT SPECIFICATION**

(45) Date of publication of patent specification: **08.05.91**   (51) Int. Cl.⁵: **B67D 1/00**

(21) Application number: **86309997.4**

(22) Date of filing: **22.12.86**

(54) **Beverage dispensing apparatus.**

(30) Priority: **10.02.86 GB 8603227**

(43) Date of publication of application:
**16.09.87 Bulletin 87/38**

(45) Publication of the grant of the patent:
**08.05.91 Bulletin 91/19**

(84) Designated Contracting States:
**AT BE CH DE ES FR GR IT LI LU NL SE**

(56) References cited:
**EP-A- 0 102 527      EP-A- 0 166 586**
**WO-A-84/01937       DE-C- 97 161**
**FR-A- 1 232 980      GB-A- 14 317**
**US-A- 2 143 823      US-A- 2 388 026**
**US-A- 4 042 151**

(73) Proprietor: **ISOWORTH LIMITED**
**1210 Lincoln Road**
**Werrington Peterborough PE4 6ND(GB)**

(72) Inventor: **Scott, Alistair**
**32 Mill Lane**
**Impington Cambridge CB4 4XN(GB)**

(74) Representative: **Beresford, Keith Denis Lewis**
**et al**
**BERESFORD & Co. 2-5 Warwick Court High**
**Holborn**
**London WC1R 5DJ(GB)**

EP 0 236 633 B1

Rank Xerox (UK) Business Services

## Description

This invention relates to beverage dispensing apparatus and is particularly concerned with such apparatus which may be used in the home for making carbonated drinks.

There have recently been a number of proposals for home carbonation apparatus which is provided with a carbonation means for carbonating water and a flavoured concentrate supply means arranged so that the concentrate is mixed with the carbonated water after discharge of the latter from the carbonation chamber. The concentrate may be contained in replaceable bottles and it has been proposed that the bottles be pressurized with carbon dioxide so as to provide the force necessary for discharging the concentrate. A particularly advantageous form of apparatus is disclosed in U.K. Patent Application No. 2161089A. In the preferred form of such apparatus, the pressure supplied to the concentrate bottles is derived from carbon dioxide in the carbonation chamber, thus utilizing carbon dioxide which would otherwise be wasted.

Whilst the utilization of carbon dioxide pressure for discharging concentrate from the concentrate bottles may operate satisfactorily to some extent, it has been found that it is not easy to control the volume of concentrate dispensed with each drink with sufficient accuracy for certain applications.

The present invention is aimed at solving this problem.

In a first aspect, the invention provides a concentrate supply device which is operable by gas under pressure and is adapted for coupling to a container for supplying concentrate therefrom to a discharge means of a carbonation apparatus for forming flavoured, carbonated drinks, characterised in that the device comprises a housing defining a metering chamber, a venturi operable by said gas under pressure and in communication with said metering chamber, and coupling means for connecting the housing to the container, the coupling means including an inlet through which concentrate from said container may be supplied to said metering chamber upon creation of reduced pressure therein when said venturi is operated, and a passage for conducting gas from said venturi into said container, said metering chamber being connected to a concentrate outlet for the supply of concentrate metered by said metering chamber to the discharge means of the carbonation apparatus.

In a second aspect, the invention provides a container, for use with the device defined in the preceding paragraph, for containing concentrate for flavouring a carbonated drink and having a connector at an upper portion thereof for cooperation with said coupling means, said connector being characterised by the combination of means for securing the connector to said coupling means, a concentrate outlet for cooperation with said inlet for the transfer of concentrate from the container to said metering chamber, a gas inlet for communication with said venturi via said passage for permitting gas from the venturi to be supplied to the container and for permitting any excess concentrate supplied to the metering chamber to be returned to the container with said gas, and a gas outlet spaced from said gas inlet, the arrangement being such that the supply of gas to the container and the return of concentrate thereto through said inlet may take place substantially without concentrate being discharged through said gas outlet.

Thus, accurately metered quantities of concentrate may be provided to the carbonation apparatus, the arrangement whereby excess concentrate supplied to the metering chamber may be returned to the container of concentrate together with the gas from the venturi being particularly advantageous.

Applicants acknowledge the disclosure of WO 84/01937 which describes a dosing apparatus for dispensing predetermined quantities of beverages from a bottle. The dosing apparatus is mounted on the neck of the bottle and includes a metering chamber which, in operation of the apparatus, is first filled by gravity with liquid from the bottle and, thereafter, the liquid in the metering chamber is dispensed into a drinking vessel. WO 84/01937 is not, however, concerned with devices operable by gas under pressure for supplying concentrate from a container thereof to a carbonation apparatus.

The invention is described further by way of example with reference to the accompanying drawings, in which:

Figure 1 illustrates carbonation apparatus provided with concentrate supply means in accordance with a preferred embodiment of the invention, the supply means being shown in section in Figure 1;

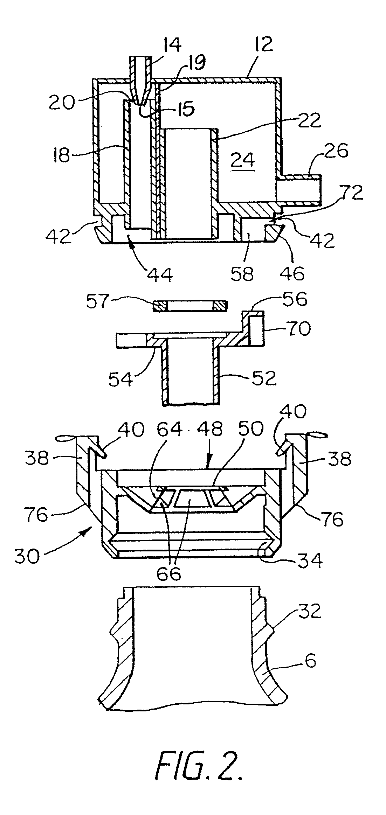

Figure 2 is a further section through the supply means of Figure 1, but with the parts shown separately; and

Figure 3 is a perspective view of the supply means of Figures 1 and 2 with the parts shown separately.

With reference to the drawings, the home carbonation apparatus shown comprises a carbonation chamber 2 provided with means, such as described in above-mentioned U.K. Application No. 2161089A, for carbonating water; a concentrate metering unit 4; a concentrate supply bottle 6; and an arrangement 8 at the bottom of the carbonation chamber for discharging carbonated water and concentrated from the apparatus into, for example, a glass 10.

The metering unit 4 comprises a housing 12 having a carbon dioxide inlet 14 connected by a conduit 16, incorporating an electrically operated valve 17, to the carbonation chamber 2 for receiving carbon dioxide gas remaining in the chamber 2 after a carbonation operation, which gas is under pressure. The lower end of the inlet pipe 14 is tapered to form a nozzle 15 and positioned within a vertical pipe 18 such that an annular gap 20 is formed between the nozzle 15 and pipe 18 to constitute a venturi. A vertically extending concentrate inlet pipe 22 is positioned inside the housing 12 adjacent the pipe 18 but the pipe 22 terminates, at its top end, at a level lower than that of the top end of the pipe 18. The interior of the housing 12 defines a concentrate metering chamber 24 into which concentrate may be supplied via the pipe 22. A partition 19 extends from top to bottom of the chamber 24 in between the pipes 18 and 22. The vertical edges 21 of the partition 19 are spaced from the interior of the housing so that the portions of the chamber 24 on opposite sides of the partition 19 are in communication with each other. A concentrate outlet 26 provided near the bottom of the chamber 24 is connected by a pipe 28 to the discharge arrangement 8.

The bottle 6 is provided with a cap 30 secured to the bottle 6 by the inter-engagement of an external rib 32 on the bottle with an internal recess 34 in the cap. The cap 34 is provided at opposite sides with a pair of latches 38 each having a downwardly inclined resilient nose 40 which engages in an annular recess 42 formed in a boss 44 provided on the metering unit 4 at the bottom thereof. The boss 44 has a tapered surface 46 which is such as to deflect the noses 40 outwardly, when the cap 30 is fitted to the boss 44, the arrangement being such that the noses 40 snap into the recess 42 once they have passed the surface 46 thereby locking the bottle 6 in its operative position.

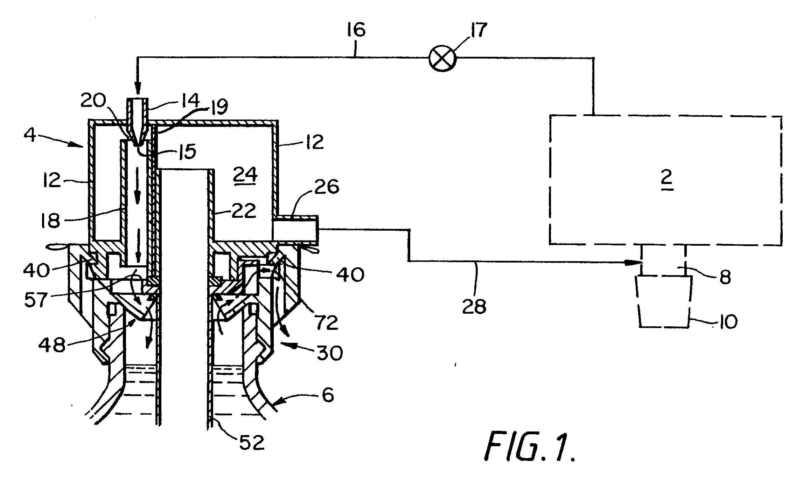

A baffle structure 48 provided inside the cap 30 has a central opening 50 which receives a dip tube 52 which extends substantially to the bottom of the bottle 6. The dip tube 52 has at its top end an outwardly directed flange 54 having at one side an upward projection 56 that engages in a corresponding recess 58 in the boss 44. A sealing ring 57 is positioned between the boss 44 and the top of the dip tube 52. Opposite the projection 56, the flange 54 is provided with a gap 60 which, when the projection 56 is correctly engaged with the recess 58, is opposite the lower end of the pipe 18 so that carbon dioxide gas may flow downwardly from the pipe 18 towards the baffle structure 48. This structure 48 comprises a downwardly inclined annular baffle 62, a frustoconical inner wall 64 which extends upwardly from the inner edge of the baffle 62 and contains a plurality of apertures 66, and a plurality of radial baffles 68 equi-angularly spaced around the structure and integral with both the baffle 62 and the wall 64. Thus, carbon dioxide gas entering the cap 30 from the pipe 18 encounters the annular baffle 62 which diverts this downwardly moving gas inwardly through the apertures 66. As is best seen in Figure 1, the upper edges of the radial baffle 68 engage the undersurface of the flange 54 so that the gas passing down the pipe 18 and through the gap 60 enters a compartment defined between an adjacent pair of the radial baffles 68 and the annular baffle 62 and this gas can only escape from this compartment by passing inwardly through the relevant aperture 66. Thus, circumferential movement of the gas is prevented by the baffles 68.

As indicated at 70, the underside of the projection 56 is hollow. The hollow 70 is in register with a passage 72 formed in the boss 44 to define together with the immediately adjacent aperture 66, a route for the exhaust of carbon dioxide gas from the bottle 6.

In operation of the apparatus, water in the carbonation chamber 2 is carbonated. Preferably, the apparatus is such that the chamber 2 is charged with sufficient water for making only a single drink during each carbonation operation. Following completion of the carbonation operation, carbon dioxide under pressure, for example a pressure of 100 psi, is supplied from the chamber 2 through the valve 17, preferably under electronic control, to the inlet 14, from which it flows downwardly through the pipe 18, creating, by means of the venturi 20, a reduced pressure in the metering chamber 24. This causes concentrate to be drawn upwardly through the dip tube 52 and the pipe 22 into the metering chamber. Although the partition 19 prevents the concentrate from being drawn directly into the venturi 20, inevitably some concentrate will be entrained by gas in the venturi 20 and hence recycled via the pipe 18 into the bottle 6. The baffle structure 48, in ensuring that the carbon dioxide gas entering the bottle 6 cannot pass directly to the exhaust route, ensures that such entrained concentrate is not ejected through the exhaust 72 but rather is discharged back into the bottle. Further, the baffle structure 48 ensures that the gas entering the bottle from the pipe 18 cannot impinge directly upon the surface of the concentrate, thus preventing upward splashing of the concentrate a consequence of which could be that splashed concentrate could be exhausted through the exhaust 72.

After an appropriate interval, the valve 17 is closed, again preferably under electronic control, the interval being sufficiently long to ensure that the metering chamber 24 is filled at least to the level of the top of the pipe 22. This particular level defines the top level of the liquid in the metering chamber 24 since, if the chamber 24 is filled to above this level, any excess may be recirculated via the venturi while the gas flow continues or will drain back into the bottle via the pipe 22 after the gas flow ceases.

When the carbonated water is discharged from the chamber 2, concentrate is also discharged, via an appropriate valve (not shown) in discharge arrangement 8, from the chamber 24, preferably under gravity, into the glass 10, this being permitted since the space above the level of liquid in the chamber 24 is connected to atmosphere via the venturi 20, pipe 18, cap 30 and exhaust 72. In this way an accurately metered quantity of concentrate appropriate to making a single drink is dispensed.

A carbon dioxide atmosphere remains in the bottle 6 above the level of concentrate thus aiding in preserving the concentrate from oxidation.

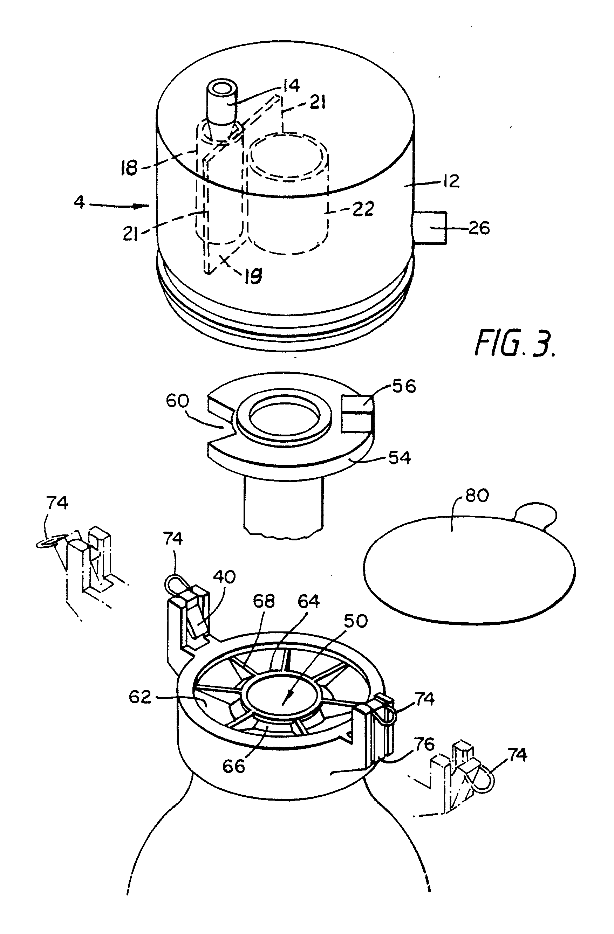

When the concentrate in the bottle 6 has been consumed, it may be disconnected from the unit 4 by pulling the latches 38 outwardly with the aid of pull tabs 74 as indicated in Figure 3. To ensure that the bottle cannot be reused (for example to avoid it being reused filled with an unsuitable liquid) the latches 38 are constructed so that they break off when pulled outwardly as shown in broken lines in Fig. 3, for which purpose a weak hinge line is formed at 76 which permits the outward movement and the breaking off.

Preferably, the cap 30 is an integral plastic moulding. The bottle 6 may also be plastic. Further, the metering unit 4 may be constructed as an integral plastic moulding. As shown in Figure 3, the bottle 6 may be provided with a foil lid 80 adhesively secured to the cap 30, the lid being removed before use of the concentrate. After removal of the lid, the dip tube 52 is inserted via the aperture 50 and then the bottle and dip tube are assembled with the unit 4, with the seal 57 located therebetween. The construction of the baffle structure 48 is such that the angular orientation of the cap relative to the dip tube and the unit 4 is irrelevant, although in practice, the compartment (not shown) for containing the bottle in the apparatus may be such that a particular angular orientation of the bottle has to be selected to render the pull tabs 74 accessible.

## Claims

1. A concentrate supply device which is operable by gas under pressure and is adapted for coupling to a container (6) for supplying concentrate therefrom to a discharge means (8, 28) of a carbonation apparatus for forming flavoured, carbonated drinks, characterised in that the device comprises a housing (12) defining a metering chamber (24), a venturi (20) operable by said gas under pressure and in communication with said metering chamber (24), and coupling means (18, 22, 44) for connecting the housing (12) to the container (6), the coupling means including an inlet (22) through which concentrate from said container (6) may be supplied to said metering chamber (24) upon creation of reduced pressure therein when said venturi (20) is operated, and a passage (18) for conducting gas from said venturi (20) into said container (6), said metering chamber (24) being connected to a concentrate outlet (26) for the supply of concentrate metered by said metering chamber (24) to the discharge means (8, 28) of the carbonation apparatus.

2. A device according to claim 1, characterised in that the coupling means includes a boss (44) having on its outer surface recess means (42) for engagement by latches of a said container.

3. A device according to claim 1 or 2, characterised in that said venturi (20) is located in said metering chamber (24).

4. A device according to claim 3, characterised in that said inlet (22) is defined by a conduit through which concentrate may be supplied from the container (6) to the metering chamber (24), said conduit terminating in the metering chamber (24) at a position above the bottom thereof and said venturi (20) being located at a level higher than said position.

5. A device according to claim 4, characterised by a partition (19) between said venturi (20) and said conduit (22).

6. A device according to any preceding claim, characterised in that said venturi (20) is connected to a source of carbon dioxide under pressure.

7. A device according to claim 6, characterised in that said source of carbon dioxide is a carbonation chamber in said carbonation apparatus (2).

8. A device according to any preceding claim, characterised in that said coupling means further includes a gas outlet passage (72) for exhausting gas from the concentrate container (6) to atmosphere.

9. A container, for use with a device according to any of claims 1 to 8, for containing concentrate for flavouring a carbonated drink and having a connector (30) at an upper portion thereof for cooperation with said coupling means (18, 22, 44), said connector (30) being characterised by the combination of means (40) for securing the connector (30) to said coupling means, a concentrate outlet (50) for cooperation with said inlet (22) for the transfer of concentrate from the container to said metering chamber (24), a gas inlet (66) for communication with said venturi via said passage (22) for permitting gas from the venturi to be supplied to the container and for permitting any excess concentrate supplied to the metering chamber to be returned to the container with said gas, and a gas outlet (also 66) spaced from said gas inlet (66), the arrangement being such that the supply of gas to the container and the return of concentrate thereto through said inlet (66) may take place substantially without concentrate being discharged through said gas outlet (66).

10. A container according to claim 9, wherein said connector (30) comprises a generally cylindrical body, a plurality of radially extending members (68) attached to and extending inwardly from said cylindrical body and defining between them said gas inlet and said gas outlet (66), and a ring (64) at the inner ends of said radial members (68) and defining said concentrate outlet (50).

11. A container according to claim 10, wherein said ring (64) is positioned at a level lower than the upper extremity of said cylindrical body.

12. A container according to claim 10 or 11, wherein said securing means comprises latch means (40) connected to said cylindrical body and projecting in an inward direction relative thereto.

13. A container according to claim 12, wherein said latch means (40) are adapted to be broken from said cylindrical body to release the container from said apparatus.

14. A container according to any of claims 9 to 13, characterised by structure (48) which substantially prevents gas entering the container (6) through said gas inlet (66) from impinging directly upon the surface of concentrate in the container (6) and from passing directly to the gas outlet route (72).

15. A container according to claim 14, characterised in that said structure (48) comprises baffle means (62, 68) arranged to deflect downwardly moving incoming gas in a generally horizontal direction whilst impeding movement thereof in a circumferential direction.

16. A container according to claim 15, wherein said baffle means (62) is arranged to deflect downwardly moving gas inwardly.

17. A container according to claim 16, characterised in that said baffle means comprises a downwardly inclined annular baffle (62) for deflecting said downwardly moving gas inwardly.

18. A container according to any of claims 14 to 17, characterised in that said structure (48) is such that gas entering said container can reach said gas outlet (72) substantially only via a space below said structure (48).

19. A device according to any of claims 1 to 8 in combination with a container according to any of claims 9 to 18.

20. A device according to claim 19, characterised by a dip tube (52) for extending into said container (6) for the supply of concentrate therethrough to said metering chamber (24).

## Revendications

1. Dispositif de fourniture de concentré manoeuvrable par du gaz sous pression et destiné à être monté sur un récipient (6) pour fournir son concentré à un dispositif d'écoulement (8, 28) d'un appareil de gazéification destiné à préparer des boissons gazeuses parfumées, dispositif caractérisé en ce qu'il comprend un boîtier (12) définissant une chambre de mesure (24), un venturi (20) utilisable par le gaz sous pression et communiquant avec la chambre de mesure (24), et des moyens d'accouplement (18,22, 44) destinés à relier le boîtier (12) au récipient (6), ces moyens d'accouplement comprenant une admission (22) par laquelle le concentré provenant du récipient (6) peut être fourni à la chambre de mesure (24) par création d'une pression réduite à l'intérieur de cette chambre lorsqu'on utilise le venturi (20), et un passage (18) destiné à faire passer le gaz provenant du venturi (20) dans le récipient (6), la chambre de mesure (24) étant reliée à un orifice de sortie de concentré (26) destiné à fournir le concentré mesuré par la chambre de mesure (24) au dispositif d'écoulement (8, 28) de l'appareil de gazéification.

2. Dispositif selon la revendication 1, caractérisé en ce que les moyens d'accouplement comprennent un bossage (44) comportant sur sa surface extérieure des évidements (42) destinés à recevoir des loquets du récipient.

3. Dispositif selon l'une quelconque des revendications 1 et 2, caractérisé en ce que le venturi (20) est placé dans la chambre de mesure (24).

4. Dispositif selon la revendication 3, caractérisé en ce que l'admission (22) est formée par un conduit par lequel le concentré peut être envoyé du récipient (6) à la chambre de mesure (24), ce conduit se terminant dans la chambre de mesure (24) en un point situé au-dessus du fond de celle-ci et le venturi (20) étant placé à un niveau plus élevé que ce point.

5. Dispositif selon la revendication 4, caractérisé en ce qu'il comporte une cloison de séparation (19) entre le venturi (20) et le conduit (22).

6. Dispositif selon l'une quelconque des revendications précédentes, caractérisé en ce que le venturi (20) est relié à une source de gaz carbonique sous pression.

7. Dispositif selon la revendication 6, caractérisé en ce que la source de gaz carbonique est une chambre de gazéification de l'appareil de gazéification (2).

8. Dispositif selon l'une quelconque des revendications précédentes, caractérisé en ce que les moyens d'accouplement comprennent en outre un passage de sortie de gaz (72) destiné à laisser s'échapper dans l'atmosphère le gaz sortant du récipient de concentré (6).

9. Récipient destiné à être utilisé avec un dispositif selon l'une quelconque des revendications 1 à 8, pour obtenir un concentré destiné à parfumer une boisson gazeuse et comportant, à sa partie supérieure, un connecteur (30) destiné à coopérer avec les moyens d'accouplement (18, 22, 44), ce connecteur (30) étant caractérisé par la combinaison de moyens (40) permettant de fixer le connecteur (30) aux moyens d'accouplement, une sortie de concentré (50) destinée à coopérer avec l'entrée (22) pour faire passer le concentré du récipient dans la chambre de mesure (24), une entrée de gaz (66) destinée à assurer la communication avec le venturi par le passage (18) pour permettre au gaz provenant du venturi d'être fourni au récipient et pour permettre également à toute quantité de concentré en excès fournie à la chambre de mesure, d'être renvoyée au récipient avec le gaz, et une sortie de gaz (66 également) espacée de l'entrée de gaz (66), la disposition étant telle que la fourniture de gaz au récipient et le retour du concentré dans ce récipient par l'orifice d'entrée (66), puissent se faire essentiellement sans que du concentré ne soit déchargé par l'orifice de sortie de gaz (66).

10. Récipient selon la revendication 9, caractérisé en ce que le connecteur (30) comprend un corps généralement cylindrique, un certain nombre d'éléments (68) disposés radialement, ces éléments étant fixés au corps cylindrique et partant vers l'intérieur de celui-ci, de manière à définir entre eux l'entrée de gaz et la sortie de gaz (66), et un anneau (64) situé contre les extrémités intérieures des éléments radiaux (68) de manière à définir l'orifice de sortie du concentré (50).

11. Récipient selon la revendication 10, caractérisé en ce que l'anneau (64) est placé à un niveau plus bas que l'extrémité supérieure du corps cylindrique.

12. Récipient selon l'une quelconque des revendications 10 et 11, caractérisé en ce que las moyens de fixation comprennent des moyens de verrouillage (40) reliés au corps cylindrique et faisant saillie vers l'intérieur par rapport à celui-ci.

13. Récipient selon la revendication 12, caractérisé en ce que les moyens de verrouillage (40) sont conçus pour se briser et se séparer du corps cylindrique de manière à libérer le récipient de l'appareil.

14. Récipient selon l'une quelconque des revendications 9 à 13, caractérisé en ce qu'il présente une structure (48) empêchant essentiellement le gaz pénétrant dans le récipient (6) par l'orifice d'entrée de gaz (66), de tomber directement sur la surface du concentré contenu dans le récipient (6), et de passer directement dans le chemin de sortie de gaz (72).

15. Récipient selon la revendication 14, caractérisé en ce que la structure (48) comprend des moyens de déflecteurs (62, 68) disposés de manière à dévier dans une direction généralement horizontale le gaz incident se déplaçant vers le bas, tout en empêchant le mouvement de ce gaz dans une direction circulaire périphérique.

16. Récipient selon la revendication 15, caractérisé
en ce que les moyens de déflecteur (62) sont
disposés de manière à dévier vers l'intérieur le
gaz qui se déplace vers le bas.

17. Récipient selon la revendication 16, caractérisé
en ce que les moyens de déflecteur comprennent un déflecteur annulaire incliné vers le bas
(62) pour dévier vers l'intérieur le gaz qui se
déplace vers le bas.

18. Récipient selon l'une quelconque des revendications 14 à 17, caractérisé en ce que la
structure (48) est telle que le gaz pénétrant
dans le récipient ne peut rejoindre essentiellement l'orifice de sortie de gaz (72) que par un
espace situé au-dessous de la structure (48).

19. Dispositif selon l'une quelconque des revendications 1 à 8, caractérisé en ce qu'il est associé à un récipient selon l'une quelconque des
revendications 9 à 18.

20. Dispositif selon la revendication 19, caractérisé
en ce qu'il comprend un tube plongeur (52)
destiné à pénétrer dans le récipient (6) pour
fournir à la chambre de mesure (24) le
concentré passant par ce tube.


**Ansprüche**

1. Konzentrat-Zuführeinrichtung, die durch unter
Druck stehendes Gas betätigbar und zum Ankoppeln an einen Behälter (6) eingerichtet ist,
um hiervon Konzentrat zu einer Abgabeeinrichtung (8, 28) einer Vorrichtung zum Versetzen
mit Kohlensäure zuzuführen, um mit Geschmacksstoffen und Kohlensäure versetzte
Getränke zu bilden, dadurch gekennzeichnet,
daß die Vorrichtung ein Gehäuse (12) umfaßt,
das eine Bemessungskammer (24) umgrenzt,
eine Strahlpumpe (20), die durch unter Druck
stehendes Gas betreibbar ist und in Verbindung mit der Bemessungskammer (24) steht,
sowie eine Koppelungseinrichtung (18, 22, 24),
um das Gehäuse (12) mit dem Behälter (6) zu
verbinden, wobei die Koppelungseinrichtung
einen Einlaß (22) umfaßt, durch welchen Konzentrat aus dem Behälter (6) der Bemessungskammer (24) infolge der Erzeugung eines verringerten Drucks hierin zugeführt werden kann,
wenn die Strahlpumpe (20) betätigt wird, und
einen Durchlaß (18), um Gas von der Strahlpumpe (20) in den Behälter (6) zu leiten, wobei die Bemessungskammer (24) mit einem Konzentratauslaß (26) für die Zuführung von Konzentrat, das durch die Bemessungskammer
(24) abgemessen wurde, zur Abgabeeinrichtung (8, 28) der Vorrichtung zum Versetzen mit
Kohlensäure verbunden ist.

2. Vorrichtung nach Anspruch 1, dadurch gekennzeichnet, daß die Kopplungseinrichtung eine
Ringwulst (44) umfaßt, die an ihrer äußeren
Oberfläche Aussparungsmittel (42) für den Eingriff durch Klinken des Behälters aufweist.

3. Vorrichtung nach Anspruch 1 oder 2, dadurch
gekennzeichnet, daß die Strahlpumpe (20) in
der Bemessungskammer (24) angeordnet ist.

4. Vorrichtung nach Anspruch 3, dadurch gekennzeichnet, daß der Einlaß (22) durch eine Leitung festgelegt ist, durch die das Konzentrat
vom Behälter (6) zur Bemessungskammer (24)
zugeführt werden kann, daß die Leitung in der
Bemessungskammer (24) an einer Stelle oberhalb ihres Bodens endet, und daß die Strahlpumpe (20) in einer Höhe angeordnet ist, die
höher liegt als diese Stelle.

5. Vorrichtung nach Anspruch 4, gekennzeichnet
durch eine Unterteilung (19) zwischen der
Strahlpumpe (20) und der Leitung (22).

6. Vorrichtung nach jedem vorangehenden Anspruch, dadurch gekennzeichnet, daß die
Strahlpumpe (20) mit einer Quelle für Druck-
Kohlendioxid verbunden ist.

7. Vorrichtung nach Anspruch 6, dadurch gekennzeichnet, daß die Kohlendioxidquelle eine
Kammer zum Versetzen mit Kohlensäure in
der Vorrichtung (2) zum Versetzen mit Kohlensäure ist.

8. Vorrichtung nach jedem vorangehenden Anspruch, dadurch gekennzeichnet, daß die Kop-
pelungseinrichtung ferner einen Gasauslaßka-
nal (72) umfaßt, um Gas aus dem Konzentratbehälter (6) zur Umgebung abzulassen.

9. Behälter für die Verwendung mit einer Vorrichtung nach irgendeinem der Ansprüche 1 bis 8,
zur Aufnahme von Konzentrat, um einem mit
Kohlensäure versetzten Getränk einen Ge-
schmack mitzuteilen, mit einem Verbindungs-
teil (30) an seinem oberen Abschnitt zur Zu-
sammenwirkung mit der Koppelungseinrich-
tung (18, 22, 44), wobei das Verbindungsteil
(30) gekennzeichnet ist durch die Kombination
aus einer Einrichtung (40) zum Befestigen des Verbindungsteils (30) an der Koppelungseinrichtung, einem Konzentratauslaß (50) für die Zusammenwirkung mit dem Einlaß (22) zum Überführen des Konzentrats aus dem Behälter zur Bemessungskammer (24), einem Gaseinlaß (66) für die Verbindung mit der Strahlpumpe über den Durchlaß (22), um es Gas aus der Strahlpumpe zu gestatten, dem Behälter zugeführt zu werden, und um es jedem überschüssigen Konzentrat, das der Bemessungskammer zugeführt wird, zu gestatten, wieder zum Behälter zusammen mit dem Gas zurückgeleitet zu werden, und einem Gasauslaß (auch 66), der gegenüber dem Gaseinlaß (66) einen Abstand aufweist, wobei eine solche Anordnung vorliegt, daß die Zufuhr des Gases zum Behälter und die Rückleitung des Konzentrates zu diesem durch den Einlaß (66) im wesentlichen so stattfindet, daß kein Konzentrat durch den Gasauslaß (66) abgegeben wird.

10. Behälter nach Anspruch 9, wobei die Verbindungseinrichtung (30) einen insgesamt zylindrischen Körper umfaßt, eine Anzahl sich radial erstreckender Teile (68), die am zylindrischen Körper angebracht sind, sich einwärts von diesen erstrecken und zwischeneinander den Gaseinlaß und den Gasauslaß (66) festlegen, sowie einen Ring (64) an den inneren Enden der radialen Teile (68), der den Konzentratauslaß (50) begrenzt.

11. Behälter nach Anspruch 10, worin der Ring (64) in einem Niveau angeordnet ist, das niedriger liegt als das obere Ende des zylindrischen Körpers.

12. Behälter nach Anspruch 10 oder 11, worin die Befestigungseinrichtung Klinkenmittel (40) umfaßt, die mit dem zylindrischen Körper verbunden sind und in einer Richtung einwärts relativ zu diesen vorstehen.

13. Behälter nach Anspruch 12, worin die Klinkenmittel (40) dazu eingerichtet sind, vom zylindrischen Körper weggebrochen zu werden, um den Behälter von der Vorrichtung freizusetzen.

14. Behälter nach jedem der Ansprüche 9 bis 13, gekennzeichnet durch einen Aufbau (48), der im wesentlichen Gas, das in den Behälter (6) durch den Gaseinlaß (66) eintritt, daran hindert, unmittelbar auf die Oberfläche des Konzentrats im Behälter (6) aufzutreffen und unmittelbar zum Gasauslaßweg (72) hindurchzugelangen.

15. Behälter nach Anspruch 14, dadurch gekennzeichnet, daß der Aufbau (48) Prallwandeinrichtungen (62, 68) umfaßt, die so angeordnet sind, daß sie das sich abwärts bewegende, ankommende Gas in einer insgesamt horizontalen Richtung ablenken, während sie dessen Bewegung in einer Umfangsrichtung behindern.

16. Behälter nach Anspruch 15, worin die Prallwandeinrichtung (62) so angeordnet ist, daß sie sich abwärts bewegendes Gas einwärts ablenkt.

17. Behälter nach Anspruch 16, dadurch gekennzeichnet, daß die Prallwandeinrichtung eine abwärts geneigte, ringförmige Prallwand (62) umfaßt, um das sich abwärts bewegende Gas einwärts abzulenken.

18. Behälter nach jedem der Ansprüche 14 bis 17, dadurch gekennzeichnet, daß der Aufbau (48) so ist, daß Gas, das in den Behälter eintritt, den Gasauslaß (72) im wesentlichen nur über einen Raum unterhalb der Anordnung (48) erreichen kann.

19. Vorrichtung nach jedem der Ansprüche 1 bis 8 in Kombination mit einem Behälter nach jedem der Ansprüche 9 bis 18.

20. Vorrichtung nach Anspruch 19, gekennzeichnet durch ein Tauchrohr (52) für die Erstreckung in den Behälter (6) zur Zufuhr von Konzentrat hierdurch zur Bemessungskammer (24).

FIG.1.

EP 0 236 633 B1

FIG.2.

FIG. 3.